# EUROPEAN PATENT APPLICATION

(11) **EP 4 787 174 A1**
(43) Date of publication of application: **05.08.2026**
(21) Application number: 25386009.2
(22) Date of filing: 31.01.2025
(51) Int. Cl.: G06F 13/16, G06F 13/18

(54) **MEMORY ACCESS REQUEST**

(71) Applicant: ARM Limited, Cambridgeshire CB1 9NJ (GB)
(72) Inventor: Randall, Joshua, Austin, TX 78735 (US); Jalal, Jamshed, Austin, TX 78735 (US); Kaseridis, Dimitrios, Austin, TX 78735 (US); YANG, James Tsung-Lun, Austin, TX 78735 (US); Bruce, Klas Magnus, Austin, TX 78735 (US)
(74) Representative: D Young & Co LLP

(57) **Abstract**

There is provided an apparatus, a system, a chip-containing product, a method, and a computer-readable medium. The apparatus comprises a requestor element configured to issue a memory access request, and control circuitry configured to receive the memory access request and to determine a request order in which to forward the received memory access request to a memory component relative to one or more further memory access requests. The control circuitry is configured, when determining the request order, to identify whether the memory access request is associated with a priority hint, and when the memory access request is associated with the priority hint, to prioritise the memory access request ahead of the at least one of the one or more further memory access requests in the request order.

## Description

### TECHNICAL FIELD

The present invention relates to data processing. More particularly the present invention relates to an apparatus, a system, a chip-containing product, a method, and a computer-readable medium.

### BACKGROUND

Some apparatuses are provided with control circuitry configured to receive memory access requests and to forward the memory access requests to a memory component.

### SUMMARY

According to a first aspect of the present techniques there is provided an apparatus comprising:
a requestor element configured to issue a memory access request; and
control circuitry configured to receive the memory access request and to determine a request order in which to forward the received memory access request to a memory component relative to one or more further memory access requests,
wherein the control circuitry is configured, when determining the request order, to identify whether the memory access request is associated with a priority hint, and when the memory access request is associated with the priority hint, to prioritise the memory access request ahead of the at least one of the one or more further memory access requests in the request order.

According to a second aspect of the present techniques there is provided a system comprising:
the apparatus according to the first aspect, implemented in at least one packaged chip;
at least one system component; and
a board,
wherein the at least one packaged chip and the at least one system component are assembled on the board.

According to a third aspect of the present techniques there is provided a chip-containing product comprising the system according to the second aspect, wherein the system is assembled on a further board with at least one other product component.

According to a fourth aspect of the present techniques there is provided a method comprising:
with a requestor element, issuing a memory access request; and
with control circuitry, receiving the memory access request and determining a request order in which to forward the received memory access request to a memory component relative to one or more further memory access requests; and
when determining the request order, identifying whether the memory access request is associated with a priority hint, and when the memory access request is associated with the priority hint, prioritising the memory access request ahead of the at least one of the one or more further memory access requests in the request order.

According to a fifth aspect of the present techniques there is provided a non-transitory computer-readable medium storing computer-readable code for fabrication of an apparatus comprising:
a requestor element configured to issue a memory access request; and
control circuitry configured to receive the memory access request and to determine a request order in which to forward the received memory access request relative to one or more further memory access requests,
wherein the control circuitry is configured, when determining the request order, to identify whether the memory access request is associated with a priority hint, and when the memory access request is associated with the priority hint, to prioritise the memory access request ahead of the at least one of the one or more further memory access requests in the request order.

### BRIEF DESCRIPTION OF THE DRAWINGS

The present invention will be described further, by way of example only, with reference to configurations thereof as illustrated in the accompanying drawings, in which:
Figure 1 schematically illustrates an apparatus according to some configurations of the present techniques;
Figure 2 schematically illustrates an apparatus according to some configurations of the present techniques;
Figure 3 schematically illustrates a priority hint instruction according to some configurations of the present techniques;
Figure 4 schematically illustrates a priority hint instruction according to some configurations of the present techniques;
Figure 5 schematically illustrates a priority hint instruction according to some configurations of the present techniques;
Figure 6 schematically illustrates a memory access request and a memory access request queue according to some configurations of the present techniques;
Figure 7 schematically illustrates a sequence of steps according to some configurations of the present techniques;
Figure 8 schematically illustrates a sequence of steps according to some configurations of the present techniques;
Figure 9 schematically illustrates a sequence of steps according to some configurations of the present techniques;
Figure 10 schematically illustrates a sequence of steps according to some configurations of the present techniques; and
Figure 11 schematically illustrates a system and a chip-containing product according to some configurations of the present techniques.

### DESCRIPTION OF EXAMPLE CONFIGURATIONS

Before discussing the configurations with reference to the accompanying figures, the following description of configurations is provided.

According to some configurations of the present techniques there is provided an apparatus comprising a requestor element configured to issue a memory access request. The apparatus is also provided with control circuitry configured to receive the memory access request and to determine a request order in which to forward the received memory access request to a memory component relative to one or more further memory access requests. The control circuitry is configured, when determining the request order, to identify whether the memory access request is associated with a priority hint, and when the memory access request is associated with the priority hint, to prioritise the memory access request ahead of the at least one of the one or more further memory access requests in the request order.

Requestor elements, for example, processing cores, graphical processing units, hardware accelerators, or input/output devices may request content, for example, data or instructions, to be retrieved from memory. In order to request the content (e.g., data or instructions), the requestor device may issue a memory access request. The memory access request may specify an address of the content that is to be accessed (e.g., an address in the memory component that the content is to be retrieved from or an address in the memory component to which the content is to be written). The memory access request may further specify a storage location in the requestor element, (e.g., a register to which content is to be retrieved or containing the content to be written). Whilst the memory access request may, in some use cases, be serviced locally, for example, where the data item is stored in one or more local storage structures associated with the requestor element, where this data cannot be provided, the memory access request may be issued to a memory component within a memory hierarchy. The memory access request is received by control circuitry which is arranged to determine a request order of the memory access requests and to forward the memory access requests to the memory component in the request order.

The control circuitry can order the memory access requests according to any ordering scheme (ordering algorithm). For example, the memory access requests may be ordered on a first in first out basis where all memory access requests that are received are placed into a queue and are forwarded to the memory component from that queue in the order in which they are placed in the queue. The memory component may be a downstream memory component that is further from the requestor element in the memory hierarchy. Alternatively, the memory component may be hosted by the control circuitry or comprised in a further requestor element different from the requestor element that issued the memory access request. The memory access request may be forwarded to a downstream memory component, handled by the control circuitry or forwarded to another requestor node through a snoop request. In each of these cases the provision of a priority hint will be useful because there is a latency associated with fulfilling memory access requests using a snoop mechanism, fulfilling the memory request using a memory component hosted by the control circuitry, and/or by directing those memory access requests to a downstream memory component. Alternatively, the control circuitry may implement a fair usage policy or one or more quality of service guarantees to ensure that different processes and/or different requestor elements are each able to obtain a share of an available memory bandwidth. As a further alternative, the memory access requests may be ordered based on a type of the memory access request, or based on an identification that plural memory access requests that have been received are located within a same region of memory.

The inventors have recognised that, regardless of the ordering scheme that is implemented, there may be cases in which a memory access request ends up queued behind a further memory access request, but where it would be beneficial for the memory access request to be prioritised in front of the further memory access request. For example, for code implementing a lock (e.g., a spinlock or a ticket lock) the memory access request and the further memory access request may each be a request requiring ownership of a lock (e.g., a data item used to prevent a further data item from being modified by multiple threads other than the one that set the lock). Both a request to acquire a lock and a request to release a lock require a memory access request to the address at which the lock is stored. Where a lock is set, processes are unable to acquire a lock and are unable to progress. The processes may therefore periodically attempt to gain access to the lock. As a result, a memory access request to release the lock may end up queued behind one or more further memory access requests attempting to acquire the lock resulting in a reduction in efficiency.

The control circuitry according to the present techniques is therefore configured, when determining the request order, to identify whether the memory access request is associated with a priority hint. The priority hint is an indication that it may be beneficial, in terms of overall system throughput, for the memory access request associated with the priority hint to be prioritised over the further memory access requests when determining the request order. For example, the control circuitry may determine that, when there is a priority hint associated with the memory access request, it is to be queued ahead of a further memory access request which, but for the priority hint, would have otherwise been queued ahead of the memory access request. For example, the memory access request may be placed at the head of the request order, such that it is the next memory access request to be forwarded to the memory component regardless of how many non-prioritised memory access request were received before the memory access request, or the memory access request may be advanced by one or more places in the queue so that it is forwarded to the memory component sooner than it otherwise would have been. On the other hand, when there is no priority hint associated with the memory access request, it is to be queued behind the further memory access request. A memory access request that is queued ahead of a further memory access request in the request order is forwarded to the storage component ahead of the further memory access request. In this way, the provision of a priority hint can be used as a way for the control circuitry to be provided with additional information that enables the control circuitry to recognise when it may be beneficial for a memory access request to be prioritised ahead of one or more further memory access requests enabling an improved instruction throughput to be achieved.

Whilst, the ordering may be performed with respect to all received memory requests that need to be forwarded to the memory component, in some configurations the control circuitry is responsive to an identification that a given memory access request of the one or more the further memory access request and the memory access request identify a same region of memory, to prioritise the memory access request ahead of the given memory access request. Performing the ordering for all memory requests removes the need to compare the target memory location of the requests and can result in a reduction in circuitry. On the other hand, prioritising requests to a same location may be more efficient because it is those requests that would delay the release of the memory access request for longer. In particular, memory access requests to different memory components or different locations may be able to be handled in parallel in some configurations, however, memory access requests to the same target location may be queued and performed in the request order. In such configurations, for the example in which the code implements a lock as described above, the priority hint can be used to prioritise requests to release the lock over requests to attempt to gain control of the lock without impeding requests to access other locations that may be unrelated to the lock and/or unrelated to the code implementing the lock.

Whilst the control circuitry may be provided to order memory access requests received from a single requestor element, in some configurations the requestor element is one of a plurality of requestor elements, and the control circuitry is configured to receive memory access requests from each of the plurality of requestor elements, the memory access requests comprising the memory access requests and the one or more further memory access requests. The present techniques can be particularly advantageous where multiple requestor elements are accessing a same memory component. In such configurations, the control circuitry is less likely to have specific knowledge of how best to order the memory access requests because it may not be apparent how to order memory access requests received from different requestor devices relative to one another for a particular use case. The provision of the priority hint therefore enables a more informed decision to be made by the control circuitry when determining the request order.

The control circuitry can be provided at any position within the memory system. However, in some configurations the apparatus comprises interconnect circuitry configured to couple the plurality of requestor elements and the memory component, wherein the control circuitry is comprised in the interconnect. The interconnect is provided to couple between the requestor elements (otherwise referred to as requestor devices) and one or more completer elements (otherwise referred to as completer devices), for example, the memory component. The memory component may be provided as the only completer element or as one of a plurality of completer elements. Where plural completer elements are provided it will be readily apparent that the control circuitry may order memory access requests for the different completer devices separately from one another. Alternatively, the memory access requests may be ordered according to a single request order.

The memory access requests received from the plurality of requestor elements may be received by the control circuitry in parallel. In some configurations the control circuitry provides a point of serialisation to serialise at least some memory access request types of the memory access requests received from each of the plurality of requestor elements. For example, the control circuitry may be provided as a fully coherent home node. The control circuitry may be capable of receiving multiple memory access requests from multiple requester devices in parallel (e.g., within a same clock cycle) but may be configured to issue requests in serial, e.g., one at a time, to the memory component. The control circuitry may order all types of requests. However, in some configurations some types of requests may be forwarded in parallel and may therefore not require ordering with respect to one another.

In some configurations the memory access request comprises at least one of: a memory read request; and/or a memory write request. The point of serialisation may serialise all types of memory access requests or just a subset of types of memory access requests. In some configurations the at least some memory access request types that are to be ordered comprise write access requests. Read access requests, or at least some types of read access requests, may be performed in parallel with one another. The memory order may therefore only be applied to write memory access requests.

The priority hint may be provided in a variety of different forms. In some configurations the priority hint comprises a single bit associated with each memory access request, and the control circuitry is configured to prioritise the memory access request in response to the single bit taking a predefined value. In other words, each memory access request (or each memory access request of a subset of types of memory access request) may be associated with a single bit. The bit may take a predefined value, for example a logical one, to indicate that the priority hint is associated with the memory access request. When the priority hint is not associated with the memory access request, the single bit is not set to the predefined value, e.g., the single bit may be set to a logical zero.

On the other hand, in some configurations the priority hint identifies one of a plurality of priority values, and the control circuitry is responsive to a determination that at least two requests of the memory access request and the one or more further memory access requests are associated with a corresponding priority hint, to determine a relative order of the at least two requests based on a comparison of the corresponding priority hint associated with each of the at least two requests. For example, the priority hint may be provided as a two-bit value with a first bit indicating whether there is a priority hint associated with the memory access instruction, and the second bit indicating a level of the prioritisation. For example, the second bit may take a first value, e.g., a logical zero, to indicate that the memory access instruction is being prioritised with a low additional priority, e.g., to indicate that the memory access instruction is to be prioritised only with respect to other memory access instructions that have no priority hint set. The second bit can then be set to a second value, e.g., a logical one, to indicate that the memory access instruction should be prioritised over memory access instructions that have no priority hint set and over memory access instructions that have a priority hint set. The control circuitry can therefore be arranged to prioritise multiple memory access requests for which the priority hint is set relative to one another based on the level of the priority hint. Where two memory access requests have a same priority hint, they may be prioritised, for example, on a first come first served basis. However, when the priority hint associated with one of the two memory access requests takes the high priority hint value and the other takes the low priority hint value, the memory access request with the high priority hint value may be prioritised ahead of the other of the two memory access requests. It will be readily apparent to the person of ordinary skill in the art that the priority hint may encode a greater number of different priority levels.

The priority hint may be provided to the control circuitry in a variety of ways. In some configurations the priority hint is encoded in the memory access request. The priority hint may therefore be encoded in one of the bits (or a plurality of the bits) that are issued from the requestor element to the control circuitry as part of the memory access request. Alternatively, the priority hint may be recorded, for example, in a control register or a dedicated storage structure accessible to the control circuitry in association with the memory access request. The priority hint can therefore be looked up based on a memory access request identifier associated with the memory access request.

In some configurations the apparatus comprises instruction decoder circuitry configured to decode instructions of a program thread executed by the requestor element, wherein the instruction decoder circuitry is responsive to a priority hint instruction to associate the priority hint with the memory access request. The decoder circuitry is provided as part of the requestor element to receive instructions and to control the requestor element, or processing circuitry comprised within the requestor element, based on those instructions. The instructions that can be decoded by the decoder circuitry are instructions that are defined in an Instruction Set Architecture (ISA) which is a complete set of instructions that can be used by a programmer or a compiler to control the processing operations performed by the requestor element. The ISA may include one or more instructions to control how data is processed by the requestor element, e.g., arithmetic instructions or logical instructions to combine data items retrieved from memory, in addition, the ISA may include one or more instructions to control how the requestor device interacts with the memory system, e.g., load instructions and store instructions. The priority hint instruction is an instruction defined in the ISA and can be inserted into a sequence of program instructions by a programmer or compiler to associated the priority hint with a memory access request. The priority hint instruction therefore provides flexibility to the programmer or compiler to indicate to the control circuitry that a particular memory request or particular memory requests are to be prioritised.

For example, in some configurations the instruction decoder circuitry is responsive to the priority hint to control the requestor element to identify, in a control register, the priority hint and the memory access request; and the control circuitry is configured to read the control register to identify whether the memory access request is associated with the priority hint. The priority hint instruction may identify the priority hint and the memory access request by storing a memory access request identifier in the control register the control circuitry can then determine whether a particular memory access request is associated with a priority hint by performing a lookup in the control register to determine if the memory access request identifier is stored. Where the priority hint is set in the control register, the priority hint may be set a-priori, i.e., before the memory access request is issued, at a same time as the memory request is issued, or even a-posteriori, i.e., after the memory request is issued, for example, if it is subsequently determined that the memory access request has not been serviced.

In some configurations the priority hint instruction comprises a prefix instruction preceding the memory access instruction. The compiler or programmer can choose to insert the prefix instruction in a sequence of instructions prior to a memory access instruction to trigger the priority hint to be associated with that memory access instruction. In some configurations the prefix instruction may be required to be placed immediately prior to the memory access instruction, such that there are no further instructions between the prefix instruction and the memory access instruction. Alternatively, in some configurations the prefix instruction may be placed at any point prior to the memory access instruction with the prefix instruction indicating to the requestor element that the next memory access instruction received is to be associated with the priority hint, regardless of whether one or more further instructions other than memory access instructions are provided between the prefix instruction and the memory access instruction.

In some configurations the instruction decoder circuitry is responsive to a first encoding of the memory access instruction, to control the requestor element to generate the memory access request without associating the memory access request with the priority hint; and the instruction decoder circuitry is responsive to a second encoding of the memory access instruction, the second encoding comprising the priority hint instruction, to control the requestor element to generate the memory access request and to associated the memory access request with the priority hint. The programmer or compiler is therefore provided with a choice of at least two encodings of the memory access instruction that can be used. The first encoding of the memory access instruction can be used for memory access instructions in which the priority hint is not associated with the memory access request. The second encoding of the memory access instruction can be used for memory access instructions in which the priority hint is associated with the memory access request. In the second encoding the memory access instruction and the priority hint instruction are the same instruction that, in a single instruction, triggers the memory access request to be issued and causes the priority hint to be associated with the memory access request. The first encoding may be distinguished from the second encoding, for example, through a different opcode or through an operand which may be provided as an immediate value in the instruction encoding.

In some configurations the control circuitry is configured to forward the memory access request and the one or more further memory access requests to a memory component in the request order. Whilst the memory access request and the further memory access request are queued by the control circuitry, the order may be changed, for example, due to the receipt of an additional memory access request associated with a priority hint or due to priority hint being set for one of the memory access request and the priority request a-posteriori.

Particular configurations will now be described with reference to the figures.

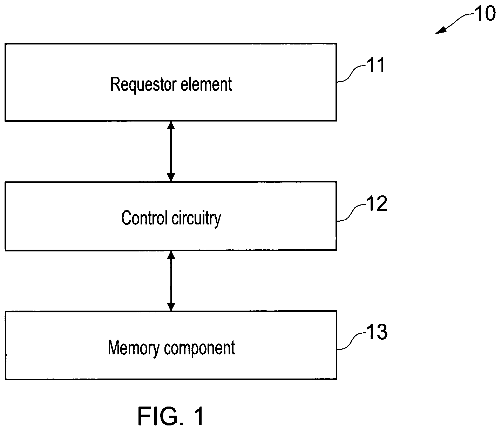

Figure 1 illustrates an apparatus 10 according to some configurations of the present techniques. The apparatus 10 is provided with a requestor element 11, control circuitry 12, and a memory component 13. The requestor element is configured to issue memory access requests to request content (e.g., data or instructions) to be retrieved from the memory component 13. The control circuitry 12 is arranged between the requestor element 11 and the memory component 13 and is arranged to receive the memory access requests issued by the requestor element 11, and to order received memory access requests to be forwarded to the memory component 13. The control circuitry 12 may be a point of serialisation that is arranged to serialise the received memory accessed requests which may be issued by multiple processes running on the requestor element 11, or from multiple requestor elements (not illustrated). The order may be determined by the control circuitry 12, for example, based on a first come first served basis, or based on a fair usage or quality of service policy. The control circuitry 12 is also configured to determine, for received memory access requests (e.g., each received memory access request or each received memory access request of one or more given types) whether the memory access request is associated with a priority hint and, when the received memory access request is associated with a priority hint, the control circuitry 12 prioritises the received memory access request over at least one further memory access request in the request order. The memory access requests can then be forwarded to the memory component 13 in the request order. The memory component 13 receives the memory access requests and returns content based on an address specified in the memory access request.

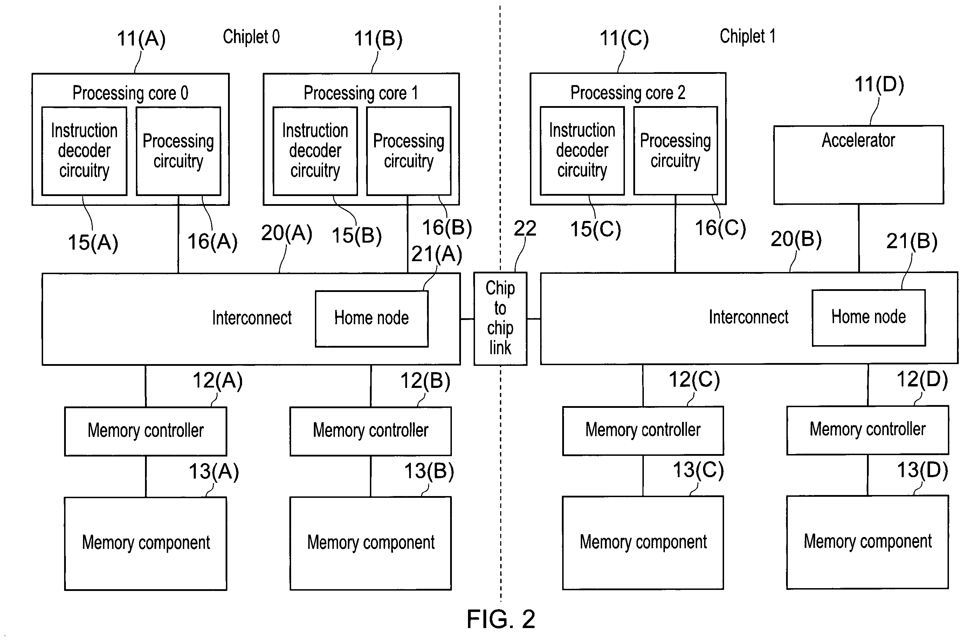

Figure 2 schematically illustrates a system according to some configurations of the present techniques. Including at least one instance of the apparatus 10 as described in relation to figure 1. In the example, the system includes four requestor elements 11 including processing core 0 11(A), processing core 1 11(B), processing core 2 11(C) and an accelerator 11(D). The requestor elements are each coupled to a memory system via an interconnect 20, which in this example, is a coherent interconnect operating a coherency protocol to maintain coherency between data cached in respective caches of each requestor element 11 and any other caching agent which is capable of holding cached data in a dirty state. The memory system comprises memory controllers 12 and memory components 13.

In the example of Figure 2, the requestor elements 11 are distributed across multiple chiplets (each chiplet comprising an integrated circuit formed on a separate semiconductor die), with processing core 0 11(A) and processing core 1 11(B) disposed on chiplet 0 and processing core 2 11(C) and the hardware accelerator 11(D) disposed on chiplet 1 in this example. The respective memory system interconnects 20 on each of the chiplets communicate via a chip-to-chip link 22. Use of chiplets can be helpful to allow for different semiconductor manufacturing nodes to be used to manufacture different portions of the system (e.g. reducing cost by manufacturing portions of the system which are less critical to performance at a less advanced manufacturing node), and can improve manufacturing yields by reducing the complexity on any one chiplet to reduce the probability that a given chiplet is faulty in manufacture compared to if the more complex whole system was implemented on a single die. It will be appreciated that the multi-chiplet system shown in figure 2 is just one example, and the use of priority hints discussed in this application could also be applied to single-chiplet systems. The chiplets shown in figure 2 are one example of a system comprising a number of distinct processing domains. Another example could be where the system-on-chip components are distributed on a number of three-dimensionally stacked dies.

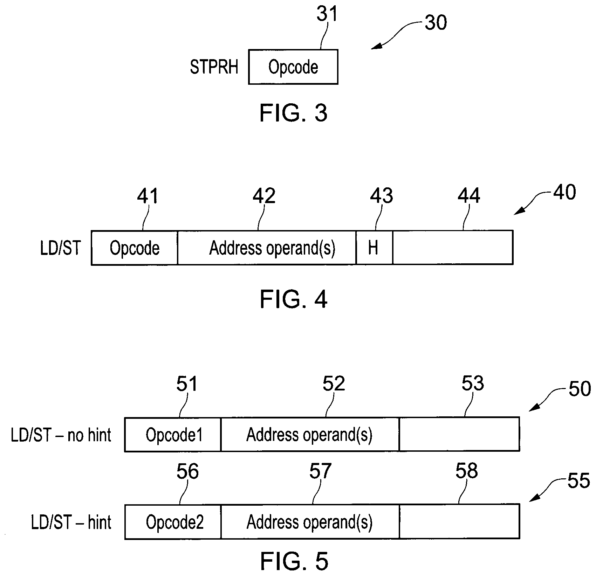

The processing cores 11 each comprise instruction decoder circuitry 15 and processing circuitry 16. The instruction decoder circuitry 15 is provided to decode a sequence of program instructions in order to control the processing circuitry 16 to perform a set of processing operations. The instructions may comprise one or more different types of memory access instructions, for example, load instructions or store instructions. The instruction decoder circuitry 15 is responsive to receipt of a memory access instruction to trigger the processing circuitry 16 (for example, a load/store unit within a processing pipeline of the processing circuitry 16) to issue a memory access request. The memory access request may be serviced by a storage structure, for example, a level 1 cache or a level 2 cache within the processing circuitry 16. However, where the processing circuitry 16 is unable to service the memory access request from its local caches, the memory access request is issued to the interconnect 20. The instruction decoder circuitry is further responsive to a priority hint instruction to associate a priority hint with a memory access instruction. Examples of the priority hint instruction will be discussed below in relation to figures 3 to 5.

The interconnect 20 is provided with home node circuitry 21 which implements a given coherency protocol, which defines a set of cache coherence transaction types and response protocols associated with those transaction types. Each address may, with respect to a particular requestor element 11, be considered to be held in a cache of that requestor element 11 in a particular coherency state. For example, the coherency state may specify, with respect to a given address and a given requestor element 11, whether valid data for that address is held in a cache of the given requestor element 11, and if valid data is held, whether that data is clean or dirty, and/or is held in an exclusive (unique) or shared state (exclusive data being held exclusively in the cache of the requestor element 11, and not in caches of other requestor elements 11, while shared data is capable of being held in caches of two or more requestor elements simultaneously). When data is held in an exclusive state, the requestor element 11 holding the data as exclusive is allowed to write to the data in the cache without first issuing coherence transactions to check with the home node 22 whether other caching agents could also be holding the data. When the data is held in a shared state, any write to the shared data in a cache of a given requestor element 11 would require first issuing a coherence transaction to check with the home node 22 whether there are conflicting copies in other caches (e.g. that coherence transaction may typically be a request that the data in the cache of the given requestor element 11 is upgraded to the exclusive coherency state, which may cause the home node 22 to send snoop requests to any other requestor elements holding that data to trigger invalidation of data from the caches of those requestor element). The home node circuitry 22 also manages any system level cache (SLC) or last-level cache (LLC), which is a shared cache, shared between multiple requestor elements 22. The shared cache is also part of the coherency scheme managed by the home node circuitry 22. The shared cache can be updated without having to bring the cache line to a processor in the exclusive state.

The interconnect 20 is also responsible for issuing memory access transactions to a memory controller 12 which generates corresponding storage access requests to memory storage 13 (the memory controller 12 may convert the interconnect protocol transactions generated by the interconnect 20 into storage-structure-specific requests for interacting with a specific memory cell array within the memory storage 13). The home node 21 (an example of control circuitry) is configured to receive memory transactions from each requestor element 11 and acts as a point of serialisation for at least some types of memory access request, e.g., memory write requests. The home node 21 determines an order in which the received memory access requests are to be forwarded to the memory controller 12. For example, the home node 21 may receive memory access requests that are required to be forwarded to the memory controller 12 at a rate that is greater than the rate at which the memory access requests can be serviced. The home node 21 is arranged to determine a request order and queue the memory access requests to be issued to the memory controller 12 according to the determined request order. Whilst some memory access requests are issued to the memory controller 12, this is not always the case and some memory access requests may be handled by the home node 21, for example, if the address indicated in the memory access request is held in the cache (a further example of a memory component) at the home node 21 and the home node 21 has the appropriate permissions to respond directly without forwarding the memory access request to the memory controller 12. Furthermore, some other transactions may be forwarded to a memory component of a different requestor element (e.g., a cache) through a snoop request. For the example code implementing a lock, as discussed above, the use of a snoop request is likely to be common.

The home node 21 is configured to determine, for received memory access requests, whether the memory access request is associated with a priority hint indicating that the memory access request associated with the priority hint is to be prioritised above pending memory access requests queued by the home node 21. When a received memory access request is associated with the priority hint, the home node 21 prioritises the memory access request above one or more further memory access requests that have been received by the home node. For example, the home node 21(A) may have received memory access requests to be routed to memory component 13(A) via memory controller 12(A) from processing core 1 11(B) and processing core 2 11(C). The memory access requests are assumed to identify a same memory location. In this example, the received memory requests are not associated with a priority hint and may be ordered in a queue according to a request ordering policy. The home node 21(A) may then, subsequently, receive a further memory access request identifying the same memory location to be routed to memory component 13(A) via memory controller 12(A). The further memory access request may be received from any of the processing cores but, typically, would originate a different requestor node 11 from those that already have outstanding requests to a given location. In this example, the further memory access to the same memory location request is received from processing core 0 11(A) that is associated with a priority hint. The home node 21(A) identifies that the further memory access request is associated with the priority hint and prioritises the further memory access request over the queued memory access requests so that the further memory access request is serviced ahead of the queued memory access requests (which were received before the further memory access request). Whilst the above example has been described in terms of the memory requests being forwarded to memory component 13(A), it will be readily apparent to the skilled person that, dependent on where the data associated with the memory location is currently stored, the memory access requests may be serviced from the cache (memory component) hosted at the home node 21, or to be forwarded as a snoop request to a further requestor element to be retrieved from a memory component associated with the further requestor element.

Figure 3 schematically illustrates an example of a priority hint instruction 30 according to some configurations of the present technique. The priority hint instruction 30 is in the form of a prefix instruction SRPRH and identifies to the requestor element that it may be beneficial for a memory access request received subsequent to the priority hint instruction 30 is to be prioritised ahead of one or more non-prioritised memory access requests. The priority hint instruction 30 comprises an opcode 31 to identify the instruction to the instruction decoder circuitry 15. If, subsequently, the instruction decoder circuitry 15 receives a memory access instruction, the processing circuitry associates the memory access request generated as a result of the memory access instruction with the priority hint.

Figure 4 schematically illustrates an alternative example of a priority hint instruction 40. The alternative example of the priority hint instruction is provided as a load/store instruction having an opcode 41 to identify the instruction, one or more address operands 42 to identify the data to be loaded, a hint bit 43, and (optionally) one or more further parameters. The hint bit 43 is provided to identify, to the instruction decoder circuitry 15, whether to associated the priority hint with a memory access request issued as a result of the load/store instruction. When the hint bit 43 takes a first value (a predetermined one of a logical one or a logical zero), the instruction decoder circuitry 15 controls the processing circuitry 16 to associate the priority hint with the memory access request. When the hint bit 43 takes a second value (the other one of the logical one and the logical zero), the instruction decoder circuitry 15 controls the processing circuitry to issue the memory access request without associating it with a priority hint.

Figure 5 schematically illustrates a further alternative example of priority hint instructions. The priority hint instructions are provided as a pair of instruction encodings comprising a first instruction encoding 50 and a second instruction encoding 55. The first encoding 50 of the memory access instruction is provided with a first encoding opcode 51, one or more address operands 52 and (optionally) one or more further parameters 53. The decoder circuitry 15 identifies the first encoding 50 of the memory access instruction through the first encoding opcode 51 and controls the processing circuitry 16 to generate the memory access request and to omit the step of associating the priority hint with the memory access request.

The second encoding 51 of the memory access instruction is provided with a second encoding opcode 56, one or more address operands 57 and (optionally) one or more further parameters 58. The decoder circuitry 15 identifies the second encoding 55 of the memory access instruction through the second encoding opcode 56 and controls the processing circuitry 16 to generate the memory access request and to associate the priority hint with the memory access request.

It will be readily apparent to the person of ordinary skill in the art that the above priority hint instructions are not mutually exclusive and a given instruction set architecture may implement any one or more of the priority hint instructions set out in figures 3 to 5.

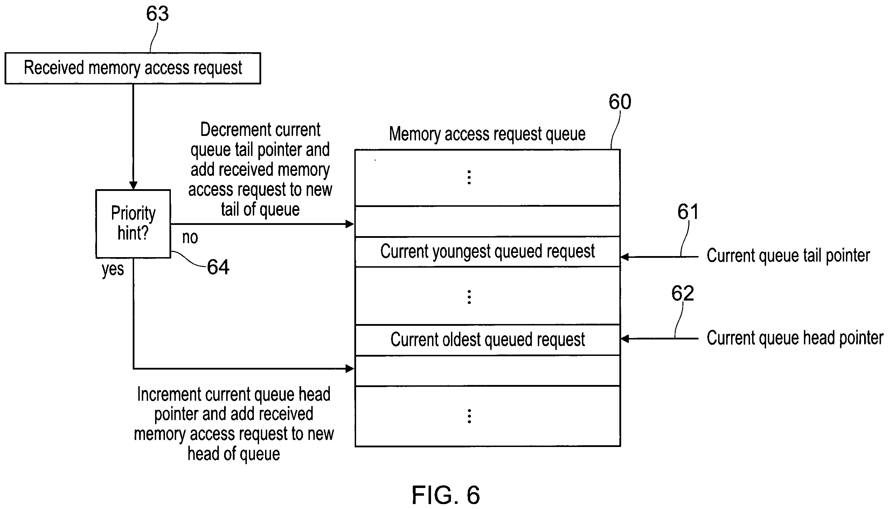

Figure 6 schematically illustrates a prioritisation scheme that may be implemented according to some configurations of the present techniques. The prioritisation scheme uses a memory access request queue 60 maintained by the control circuitry. The memory access request queue 60 stores memory access requests received from requestor elements to be issued to the memory component. The memory access request queue is maintained using a tail queue pointer 61 indicating a youngest queued memory access request and a queue head pointer 62 indicating an oldest queued request. In the illustrated example, the memory accessed requests are issued to the memory component starting with the oldest queued request. When the oldest queued request, as indicated by the queue head pointer 62, has been issued, the queue head pointer 62 is updated to indicate the new oldest queued request.

When a new memory access request 63 is received, the received request 63 is passed to determination circuitry 64 to determine whether the priority hint is associated with the memory access request 63. If the determination circuitry 64 identifies that the memory access request 63 is associated with a priority hint, then the received memory access request 63 is added to the head of the queue 60 and the queue head pointer is updated to indicate the received memory access request 63 as the new head of the queue 60 so that the next memory access request to be issued is the received memory access request 63. If the determination circuitry 64 identifies that the received memory access request 63 is not associated with a priority hint, then the received memory access request is added to the tail of the queue and the current queue tail pointer 61 is updated to indicate the received memory access request 63 as the new tail of the queue 60.

It will be readily apparent that the first-in-first-out ordering algorithm described with reference to figure 6 is merely one example of a possible default ordering algorithm and that alternative ordering algorithms could be provided. In general, when a received memory access request is associated with a priority hint, the received memory access request is prioritised to a position in the request queue that, when one or more further memory access requests are present in the request queue, is further ahead than the received memory access request would be positioned had the priority hint not been associated with the received memory access request. It will be further apparent to the skilled person that more complex ordering algorithms that identify requests for the same location may be provided. For example, where two requests to the same location are identified in a queue, the later of these requests (in queue order) may be blocked until the first one of these requests has fully resolved. This could be implemented for example, by maintaining a record of memory locations for which there is an outstanding request and deferring any further memory access requests to those locations until the outstanding requests have been completed. Whilst the later request is blocked the memory ordering algorithm may allow one or more other requests to different memory locations to be issued.

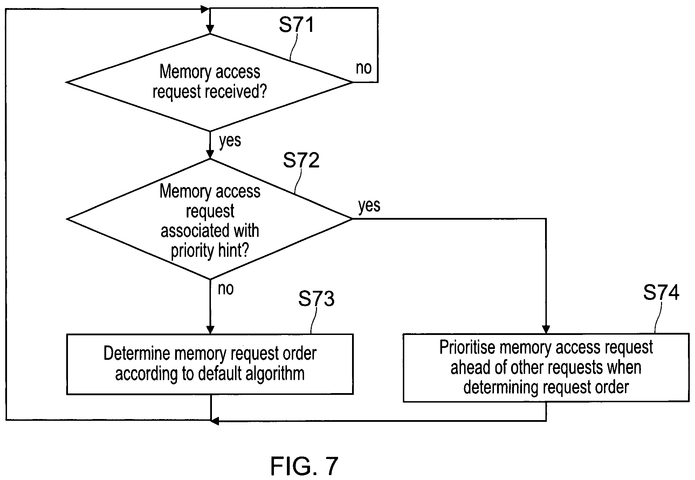

Figure 7 schematically illustrates a sequence of steps carried out by control circuitry according to some configurations of the present techniques. Flow begins at step S71 where it is determined whether a memory access request has been received from a requestor device. If, at step S71, it is determined that no memory access request has been received, then flow remains at step S71. If, at step S71, it is determined that a memory access request has been received, then flow proceeds to step S72 where it is determined whether the memory access request is associated with a priority hint. If, at step S72, it is determined that the received memory access request is not associated with a priority hint, then flow proceeds to step S73 where a memory request order of the received memory access request, relative to one or more further memory access requests received by the control circuitry, is determined according to a default request ordering algorithm. Flow then returns to step S71. If, at step S72, it is determined that the memory access request is associated with a priority hint, then flow proceeds to step S74 where the memory access request is prioritised ahead of at least one of the one or more further memory access requests when determining the request order. Flow then returns to step S71.

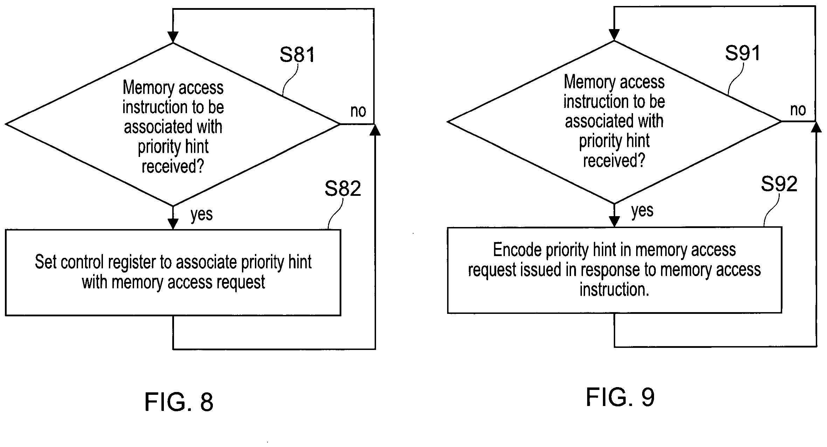

Figure 8 schematically illustrates a sequence of steps carried out by the requestor element to associate a priority hint with a memory access request. Flow begins at step S81, where it is determined if a memory access instruction to be associated with a priority hint has been received. If, at step S81, it is determined that no memory access instruction to be associated with a priority hint has been received, then flow remains at step S81. If, at step S81, it is determined that a memory access instruction to be associated with a priority hint has been received, then flow proceeds to step S82. At step S82, the requestor element sets a value in a control register to associate the priority hint with the memory access request. Flow then returns to step S81.

Figure 9 schematically illustrates a sequence of steps carried out by the requestor element to associate a priority hint with a memory access request. Flow begins at step S91, where it is determined if a memory access instruction to be associated with a priority hint has been received. If, at step S91, it is determined that no memory access instruction to be associated with a priority hint has been received, then flow remains at step S91. If, at step S91, it is determined that a memory access instruction to be associated with a priority hint has been received, then flow proceeds to step S92. At step S92, the priority hint is encoded in a memory access request issued in response to the memory access instruction. Flow then returns to step S91.

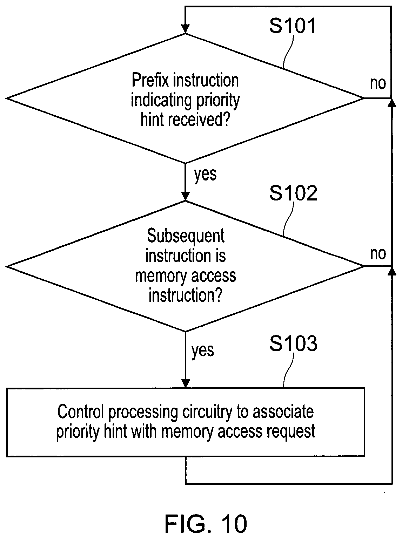

Figure 10 schematically illustrates a sequence of steps carried out by instruction decoder circuitry comprised in a requestor element according to some configurations of the present techniques. Flow begins at step S101 where it is determined whether a prefix instruction indicating a priority hint has been received. If, at step S101, it is determined that no prefix instruction indicating a priority hint has been received, then flow remains at step S101. If, at step S101, it is determined that a prefix instruction indicating a priority hint has been received, then flow proceeds to step S102. At step S102, it is determined if a subsequent instruction is a memory access instruction. If, at step S102, it is determined that the subsequent instruction is not a memory access instruction, then flow returns to step S101. If, at step S102, it is determined that the subsequent instruction is a memory access instruction, then flow proceeds to step S103 where the instruction decoder circuitry causes the processing circuitry to associate the priority hint with the memory access request resulting from the memory access instruction. Flow then returns to step S101.

Concepts described herein may be embodied in a system comprising at least one packaged chip. The apparatus described earlier is implemented in the at least one packaged chip (either being implemented in one specific chip of the system, or distributed over more than one packaged chip). The at least one packaged chip is assembled on a board with at least one system component. A chip-containing product may comprise the system assembled on a further board with at least one other product component. The system or the chip-containing product may be assembled into a housing or onto a structural support (such as a frame or blade).

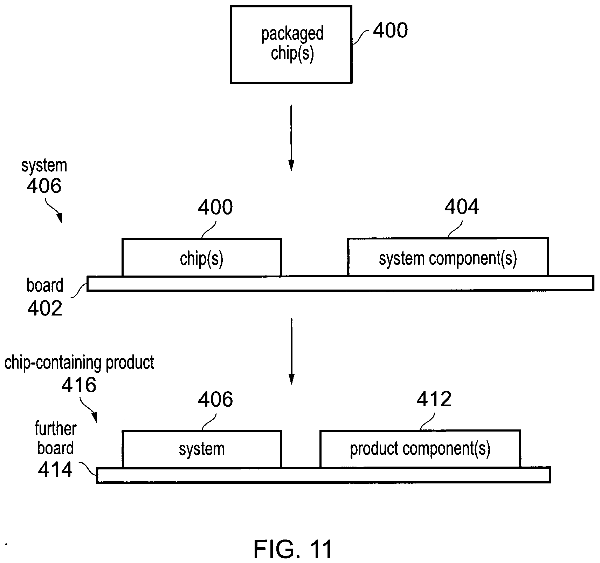

As shown in Figure 11, one or more packaged chips 400, with the apparatus described above implemented on one chip or distributed over two or more of the chips, are manufactured by a semiconductor chip manufacturer. In some examples, the chip product 400 made by the semiconductor chip manufacturer may be provided as a semiconductor package which comprises a protective casing (e.g. made of metal, plastic, glass or ceramic) containing the semiconductor devices implementing the apparatus described above and connectors, such as lands, balls or pins, for connecting the semiconductor devices to an external environment. Where more than one chip 400 is provided, these could be provided as separate integrated circuits (provided as separate packages), or could be packaged by the semiconductor provider into a multi-chip semiconductor package (e.g. using an interposer, or by using three-dimensional integration to provide a multi-layer chip product comprising two or more vertically stacked integrated circuit layers).

In some examples, a collection of chiplets (i.e. small modular chips with particular functionality) may itself be referred to as a chip. A chiplet may be packaged individually in a semiconductor package and/or together with other chiplets into a multi-chiplet semiconductor package (e.g. using an interposer, or by using three-dimensional integration to provide a multi-layer chiplet product comprising two or more vertically stacked integrated circuit layers).

The one or more packaged chips 400 are assembled on a board 402 together with at least one system component 404 to provide a system 406. For example, the board may comprise a printed circuit board. The board substrate may be made of any of a variety of materials, e.g. plastic, glass, ceramic, or a flexible substrate material such as paper, plastic or textile material. The at least one system component 404 comprise one or more external components which are not part of the one or more packaged chip(s) 400. For example, the at least one system component 404 could include, for example, any one or more of the following: another packaged chip (e.g. provided by a different manufacturer or produced on a different process node), an interface module, a resistor, a capacitor, an inductor, a transformer, a diode, a transistor and/or a sensor.

A chip-containing product 416 is manufactured comprising the system 406 (including the board 402, the one or more chips 400 and the at least one system component 404) and one or more product components 412. The product components 412 comprise one or more further components which are not part of the system 406. As a non-exhaustive list of examples, the one or more product components 412 could include a user input/output device such as a keypad, touch screen, microphone, loudspeaker, display screen, haptic device, etc.; a wireless communication transmitter/receiver; a sensor; an actuator for actuating mechanical motion; a thermal control device; a further packaged chip; an interface module; a resistor; a capacitor; an inductor; a transformer; a diode; and/or a transistor. The system 406 and one or more product components 412 may be assembled on to a further board 414.

The board 402 or the further board 414 may be provided on or within a device housing or other structural support (e.g. a frame or blade) to provide a product which can be handled by a user and/or is intended for operational use by a person or company. The system 406 or the chip-containing product 416 may be at least one of: an end-user product, a machine, a medical device, a computing or telecommunications infrastructure product, or an automation control system. For example, as a non-exhaustive list of examples, the chip-containing product could be any of the following: a telecommunications device, a mobile phone, a tablet, a laptop, a computer, a server (e.g. a rack server or blade server), an infrastructure device, networking equipment, a vehicle or other automotive product, industrial machinery, consumer device, smart card, credit card, smart glasses, avionics device, robotics device, camera, television, smart television, DVD players, set top box, wearable device, domestic appliance, smart meter, medical device, heating/lighting control device, sensor, and/or a control system for controlling public infrastructure equipment such as smart motorway or traffic lights.

Concepts described herein may be embodied in computer-readable code for fabrication of an apparatus that embodies the described concepts. For example, the computer-readable code can be used at one or more stages of a semiconductor design and fabrication process, including an electronic design automation (EDA) stage, to fabricate an integrated circuit comprising the apparatus embodying the concepts. The above computer-readable code may additionally or alternatively enable the definition, modelling, simulation, verification and/or testing of an apparatus embodying the concepts described herein.

For example, the computer-readable code for fabrication of an apparatus embodying the concepts described herein can be embodied in code defining a hardware description language (HDL) representation of the concepts. For example, the code may define a register-transfer-level (RTL) abstraction of one or more logic circuits for defining an apparatus embodying the concepts. The code may define a HDL representation of the one or more logic circuits embodying the apparatus in Verilog, SystemVerilog, Chisel, or VHDL (Very High-Speed Integrated Circuit Hardware Description Language) as well as intermediate representations such as FIRRTL. Computer-readable code may provide definitions embodying the concept using system-level modelling languages such as SystemC and SystemVerilog or other behavioural representations of the concepts that can be interpreted by a computer to enable simulation, functional and/or formal verification, and testing of the concepts.

Additionally or alternatively, the computer-readable code may define a low-level description of integrated circuit components that embody concepts described herein, such as one or more netlists or integrated circuit layout definitions, including representations such as GDSII. The one or more netlists or other computer-readable representation of integrated circuit components may be generated by applying one or more logic synthesis processes to an RTL representation to generate definitions for use in fabrication of an apparatus embodying the invention. Alternatively or additionally, the one or more logic synthesis processes can generate from the computer-readable code a bitstream to be loaded into a field programmable gate array (FPGA) to configure the FPGA to embody the described concepts. The FPGA may be deployed for the purposes of verification and test of the concepts prior to fabrication in an integrated circuit or the FPGA may be deployed in a product directly.

The computer-readable code may comprise a mix of code representations for fabrication of an apparatus, for example including a mix of one or more of an RTL representation, a netlist representation, or another computer-readable definition to be used in a semiconductor design and fabrication process to fabricate an apparatus embodying the invention. Alternatively or additionally, the concept may be defined in a combination of a computer-readable definition to be used in a semiconductor design and fabrication process to fabricate an apparatus and computer-readable code defining instructions which are to be executed by the defined apparatus once fabricated.

Such computer-readable code can be disposed in any known transitory computer-readable medium (such as wired or wireless transmission of code over a network) or non-transitory computer-readable medium such as semiconductor, magnetic disk, or optical disc. An integrated circuit fabricated using the computer-readable code may comprise components such as one or more of a central processing unit, graphics processing unit, neural processing unit, digital signal processor or other components that individually or collectively embody the concept.

In brief overall summary there is provided an apparatus, a system, a chip-containing product, a method, and a computer-readable medium. The apparatus comprises a requestor element configured to issue a memory access request, and control circuitry configured to receive the memory access request and to determine a request order in which to forward the received memory access request to a memory component relative to one or more further memory access requests. The control circuitry is configured, when determining the request order, to identify whether the memory access request is associated with a priority hint, and when the memory access request is associated with the priority hint, to prioritise the memory access request ahead of the at least one of the one or more further memory access requests in the request order.

In the present application, the words "configured to..." are used to mean that an element of an apparatus has a configuration able to carry out the defined operation. In this context, a "configuration" means an arrangement or manner of interconnection of hardware or software. For example, the apparatus may have dedicated hardware which provides the defined operation, or a processor or other processing device may be programmed to perform the function. "Configured to" does not imply that the apparatus element needs to be changed in any way in order to provide the defined operation.

In the present application, lists of features preceded with the phrase "at least one of" mean that any one or more of those features can be provided either individually or in combination. For example, "at least one of: [A], [B] and [C]" encompasses any of the following options: A alone (without B or C), B alone (without A or C), C alone (without A or B), A and B in combination (without C), A and C in combination (without B), B and C in combination (without A), or A, B and C in combination.

Although illustrative configurations of the invention have been described in detail herein with reference to the accompanying drawings, it is to be understood that the invention is not limited to those precise configurations, and that various changes, additions and modifications can be effected therein by one skilled in the art without departing from the scope of the invention as defined by the appended claims. For example, various combinations of the features of the dependent claims could be made with the features of the independent claims without departing from the scope of the present invention.

Some configurations of the present techniques are described by the following numbered clauses:
Clause 1. An apparatus comprising:
   a requestor element configured to issue a memory access request; and
   control circuitry configured to receive the memory access request and to determine a request order in which to forward the received memory access request to a memory component relative to one or more further memory access requests,
   wherein the control circuitry is configured, when determining the request order, to identify whether the memory access request is associated with a priority hint, and when the memory access request is associated with the priority hint, to prioritise the memory access request ahead of the at least one of the one or more further memory access requests in the request order.
Clause 2. The apparatus of clause 1, wherein the requestor element is one of a plurality of requestor elements, and the control circuitry is configured to receive memory access requests from each of the plurality of requestor elements, the memory access requests comprising the memory access requests and the one or more further memory access requests.
Clause 3. The apparatus of clause 2, comprising interconnect circuitry configured to couple the plurality of requestor elements and the memory component, wherein the control circuitry is comprised in the interconnect.
Clause 4. The apparatus of clause 3, wherein the control circuitry provides a point of serialisation to serialise at least some memory access request types of the memory access requests received from each of the plurality of requestor elements.
Clause 5. The apparatus of clause 4, wherein the at least some memory access request types comprise write access requests.
Clause 6. The apparatus of any preceding clause, wherein the memory access request comprises at least one of:
   a memory read request; and/or
   a memory write request.
Clause 7. The apparatus of any preceding clause, wherein the priority hint comprises a single bit associated with each memory access request, and the control circuitry is configured to prioritise the memory access request in response to the single bit taking a predefined value.
Clause 8. The apparatus of any of clauses 1 to 6, wherein the priority hint identifies one of a plurality of priority values, and the control circuitry is responsive to a determination that at least two requests of the memory access request and the one or more further memory access requests are associated with a corresponding priority hint, to determine a relative order of the at least two requests based on a comparison of the corresponding priority hint associated with each of the at least two requests.
Clause 9. The apparatus of any preceding clause, wherein the priority hint is encoded in the memory access request.
Clause 10. The apparatus of any preceding clause, comprising instruction decoder circuitry configured to decode instructions of a program thread executed by the requestor element, wherein the instruction decoder circuitry is responsive to a priority hint instruction to associate the priority hint with the memory access request.
Clause 11. The apparatus of clause 10, wherein:
   the instruction decoder circuitry is responsive to the priority hint to control the requestor element to identify, in a control register, the priority hint and the memory access request; and
   the control circuitry is configured to read the control register to identify whether the memory access request is associated with the priority hint.
Clause 12. The apparatus of clause 10 or clause 11, wherein the priority hint instruction comprises a prefix instruction preceding the memory access instruction.
Clause 13. The apparatus of clause 10 or clause 11, wherein:
   the instruction decoder circuitry is responsive to a first encoding of the memory access instruction, to control the requestor element to generate the memory access request without associating the memory access request with the priority hint; and
   the instruction decoder circuitry is responsive to a second encoding of the memory access instruction, the second encoding comprising the priority hint instruction, to control the requestor element to generate the memory access request and to associated the memory access request with the priority hint.
Clause 14. The apparatus of any preceding clause, wherein the control circuitry is configured to forward the memory access request and the one or more further memory access requests to a memory component in the request order.
Clause 15. The apparatus of any preceding clause, wherein the control circuitry is responsive to an identification that a given memory access request of the one or more the further memory access request and the memory access request identify a same region of memory, to prioritise the memory access request ahead of the given memory access request.
Clause 16. A system comprising:
   the apparatus of any preceding clause, implemented in at least one packaged chip;
   at least one system component; and
   a board,
   wherein the at least one packaged chip and the at least one system component are assembled on the board.
Clause 17. A chip-containing product comprising the system of clause 15, wherein the system is assembled on a further board with at least one other product component.
Clause 18. A method comprising:
   with a requestor element, issuing a memory access request; and
   with control circuitry, receiving the memory access request and determining a request order in which to forward the received memory access request to a memory component relative to one or more further memory access requests; and
   when determining the request order, identifying whether the memory access request is associated with a priority hint, and when the memory access request is associated with the priority hint, prioritising the memory access request ahead of the at least one of the one or more further memory access requests in the request order.
Clause 19. A non-transitory computer-readable medium storing computer-readable code for fabrication of the apparatus according to any of clauses 1 to 15.

## Claims

1. An apparatus comprising:
a requestor element configured to issue a memory access request; and
control circuitry configured to receive the memory access request and to determine a request order in which to forward the received memory access request to a memory component relative to one or more further memory access requests,
wherein the control circuitry is configured, when determining the request order, to identify whether the memory access request is associated with a priority hint, and when the memory access request is associated with the priority hint, to prioritise the memory access request ahead of the at least one of the one or more further memory access requests in the request order.

2. The apparatus of claim 1, wherein the requestor element is one of a plurality of requestor elements, and the control circuitry is configured to receive memory access requests from each of the plurality of requestor elements, the memory access requests comprising the memory access requests and the one or more further memory access requests.

3. The apparatus of claim 2, comprising interconnect circuitry configured to couple the plurality of requestor elements and the memory component, wherein the control circuitry is comprised in the interconnect.

4. The apparatus of claim 3, wherein the control circuitry provides a point of serialisation to serialise at least some memory access request types of the memory access requests received from each of the plurality of requestor elements.

5. The apparatus of any preceding claim, wherein the control circuitry is responsive to an identification that a given memory access request of the one or more the further memory access request and the memory access request identify a same region of memory, to prioritise the memory access request ahead of the given memory access request.

6. The apparatus of any of claims 1 to 4, wherein the priority hint identifies one of a plurality of priority values, and the control circuitry is responsive to a determination that at least two requests of the memory access request and the one or more further memory access requests are associated with a corresponding priority hint, to determine a relative order of the at least two requests based on a comparison of the corresponding priority hint associated with each of the at least two requests.

7. The apparatus of any preceding claim, wherein the priority hint is encoded in the memory access request.

8. The apparatus of any preceding claim, comprising instruction decoder circuitry configured to decode instructions of a program thread executed by the requestor element, wherein the instruction decoder circuitry is responsive to a priority hint instruction to associate the priority hint with the memory access request.

9. The apparatus of claim 8, wherein:
the instruction decoder circuitry is responsive to the priority hint to control the requestor element to identify, in a control register, the priority hint and the memory access request; and
the control circuitry is configured to read the control register to identify whether the memory access request is associated with the priority hint.

10. The apparatus of claim 8 or claim 9, wherein the priority hint instruction comprises a prefix instruction preceding the memory access instruction.

11. The apparatus of claim 8 or claim 9, wherein:
the instruction decoder circuitry is responsive to a first encoding of the memory access instruction, to control the requestor element to generate the memory access request without associating the memory access request with the priority hint; and
the instruction decoder circuitry is responsive to a second encoding of the memory access instruction, the second encoding comprising the priority hint instruction, to control the requestor element to generate the memory access request and to associated the memory access request with the priority hint.

12. A system comprising:
the apparatus of any preceding claim, implemented in at least one packaged chip;
at least one system component; and
a board,
wherein the at least one packaged chip and the at least one system component are assembled on the board.

13. A chip-containing product comprising the system of claim 12, wherein the system is assembled on a further board with at least one other product component.

14. A method comprising:
with a requestor element, issuing a memory access request; and
with control circuitry, receiving the memory access request and determining a request order in which to forward the received memory access request to a memory component relative to one or more further memory access requests; and
when determining the request order, identifying whether the memory access request is associated with a priority hint, and when the memory access request is associated with the priority hint, prioritising the memory access request ahead of the at least one of the one or more further memory access requests in the request order.

15. A non-transitory computer-readable medium storing computer-readable code for fabrication of an apparatus comprising:
a requestor element configured to issue a memory access request; and
control circuitry configured to receive the memory access request and to determine a request order in which to forward the received memory access request relative to one or more further memory access requests,
wherein the control circuitry is configured, when determining the request order, to identify whether the memory access request is associated with a priority hint, and when the memory access request is associated with the priority hint, to prioritise the memory access request ahead of the at least one of the one or more further memory access requests in the request order.
